# EUROPEAN PATENT SPECIFICATION

(11) **EP 2 802 124 B1**
(45) Date of publication and mention of the grant of the patent: **25.09.2019**
(21) Application number: 13840359.7
(22) Date of filing: 21.03.2013
(51) Int. Cl.: H04L 29/08

(54) **METHOD AND SYSTEM FOR FILE TRANSFER, AND MAIN CONTROL DEVICE**
DATEIÜBERTRAGUNGSVERFAHREN UND -SYSTEM SOWIE HAUPTSTEUERUNGSVORRICHTUNG
PROCÉDÉ ET SYSTÈME DE TRANSFERT DE FICHIER, ET DISPOSITIF DE COMMANDE PRINCIPAL

(30) Priority: 26.09.2012 CN 201210363524
(43) Date of publication of application: 12.11.2014
(73) Proprietor: Huawei Device Co., Ltd., Dongguan, Guangdong 523808 (CN)
(72) Inventor: MAO, Xiaoou, Shenzhen Guangdong 518129 (CN); ZHANG, Xuenan, Shenzhen Guangdong 518129 (CN)
(74) Representative: Körber, Martin Hans
(86) International application number: PCT/CN2013/072980
(87) International publication number: WO 2014/048093

(56) References cited:
- CN-A- 101 743 739
- CN-A- 102 377 823
- CN-A- 102 447 969
- CN-A- 102 685 318
- CN-A- 102 932 412
- US-A1- 2009 017 799
- US-A1- 2009 195 445
- US-A1- 2010 274 852
- US-A1- 2011 081 923

## Description

### TECHNICAL FIELD

Embodiments of the present invention relate to the field of communications device technologies, and in particular, to a file transmission method and system and a controlling device.

### BACKGROUND

With development of information technologies, technologies and manners for interconnection and transmission between devices are already comprehensive, especially interconnection between home devices, for example, interconnection between devices such as a television set, a desktop computer, an acoustic equipment, a set-top box, a tablet computer, and a mobile phone. For example, an Airplay technology of Apple Inc. for multimedia play, a Digital Living Network Alliance (Digital Living Network Alliance, DLNA) technology, a technology used by a Wireless Mobile Multimedia Transmission Protocol (Wireless Mobile Multimedia Transmission Protocol, WiMO) advocated by China Mobile, basic file transmission, or other interaction or the like can implement interconnection between home devices, thereby implementing file transmission and sharing between the home devices.

In interconnected devices, a device for sharing or transmitting a file to other devices is referred to as a controlling device, and a device for receiving the file shared or transmitted by the controlling device is referred to as a controlled device. In the DLNA or WiMO technology, to perform the transmission work between the devices, the controlling device is generally a device with a display screen. All controlled devices in a specific scope are generally displayed on the controlling device in the form of a list or a grid. After connection succeeds, a device model, an icon, a name or a customized identifier of the controlled device is generally used as a display identifier. Then, the display identifier of the controlled device that needs to accept sharing may be selected on the controlling device, and a file to be shared is transmitted to the controlled device, so that the controlled device can receive and share the file transmitted by the controlling device.

According to the technical solution to file transmission between devices in the prior art, a user who uses a controlling device has to memorize models, names, icons or customized display identifiers of controlled devices to implement file transmission between the controlling device and the controlled device, which leads to inconvenience of using the technical solution to file transmission between devices in the prior art.

US 20090017799 A1 discloses a method and a system for transmitting a selected file from a transmitting mobile terminal to a receiving mobile terminal where a user selects a file, such as a picture, a message, e-payments or the like, gets a good grip of the mobile terminal, and makes a throwing gesture towards a desired receiver of the selected file. The throwing gesture is detected and converted into analogue/digital signals. The signals are then transferred and used to control/steer the functionality of the mobile terminal in accordance therewith.

US 20090195445 A1 provides a system to predefine multiple allowed activities of a wireless computing device based on geographic location and, specifically, for security parameters associated with wireless access of such devices. Wireless access can be controlled on a movable computing device by ascertaining a geographic location of computing device, using a position sensing device; coupling motion sensing device with computing device; determining whether geographic location is within a predefined zone; and generating a command for controlling wireless access in response to determining. Commands can be derived from a predetermined table of allowed wireless activities in a geographically defined area and, specifically, for security parameters associated with the computing device. Wireless activities can include Internet protocols, instant messaging, email, and newsgroups. The commands can include blocking all wireless access, restricting file sharing, restricting Internet access, restricting email, restricting newsgroups, restricting instant messaging, and generating reports.

### SUMMARY

The invention is defined by the claims. Embodiments of the present invention provide a file transmission method and a controlling device according to the independent claims, so as to overcome a disadvantage of inconvenience of using a technical solution to file transmission between devices in the prior art.

According to a file transmission method and a controlling device provided in the embodiments of the present invention, the controlling device recognizes an absolute operation direction of operating a selected file; and determines, according to the absolute operation direction, layout of a manipulation environment, and a location of a controlled device in the layout of the manipulation environment, a target controlled device with which the selected file is shared, where the layout of the manipulation environment is a structural diagram of a configuration of a manipulation environment in which the controlling device and the controlled device coexist; and transmits the selected file to the target controlled device to share the selected file. According to the foregoing technical solutions in the embodiments of the present invention, when a file is transmitted between devices, a user does not need to memorize a model, a name, an icon or a customized identifier of each controlled device, and can transmit a selected file to and share the selected file with a controlled device simply by pushing the selected file on the controlling device toward the target controlled device. The technical solutions in the embodiments of the present invention are easy to implement and facilitate an operation, and can effectively improve user experience.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a file transmission method according to an embodiment of the present invention;
FIG. 2 is a schematic diagram of a manipulation environment W according to an embodiment of the present invention;
FIG. 3 is a status diagram of the manipulation environment W shown in FIG. 2;
FIG. 4 is a schematic structural diagram of a controlling device according to an embodiment of the present invention;
FIG. 5 is a schematic structural diagram of a controlling device according to another embodiment of the present invention;
FIG. 6 is a schematic structural diagram of a mobile terminal used as a controlling device according to an embodiment of the present invention; and
FIG. 7 is a structural diagram of a file transmission system according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

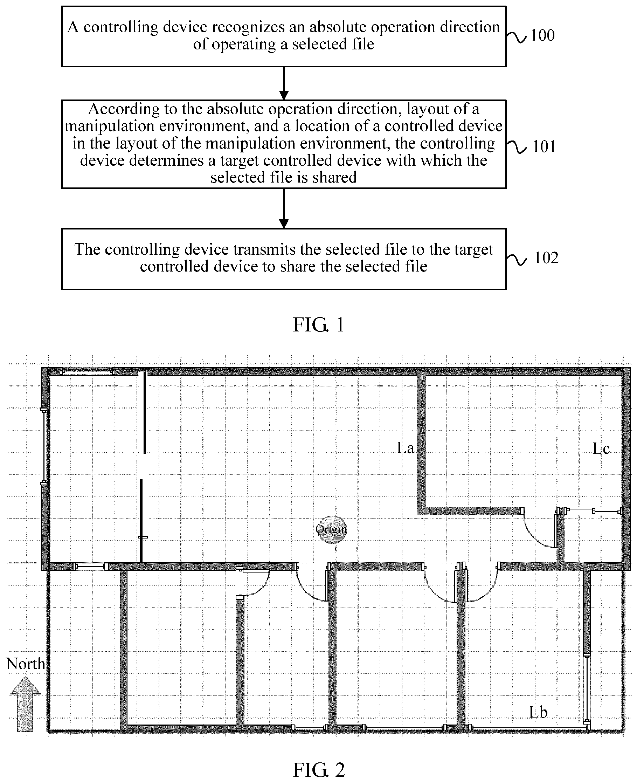

FIG. 1 is a flowchart of a file transmission method according to an embodiment of the present invention. As shown in FIG. 1, the file transmission method in this embodiment may specifically include the following steps:
100. A controlling device recognizes an absolute operation direction of operating a selected file.

Specifically, the controlling device in this embodiment is a device with a touchscreen. The selected file is a file selected by a user for transmission and sharing. For example, the file may be a file of a video, music, an email, an SMS message, a photo, or the like.

When the user performs an operation on the selected file on the display screen by using a hand or a stylus, the controlling device may recognize the absolute operation direction in which the user performs the operation on the selected file. In this embodiment, the absolute operation direction refers to an operation direction identified by a geographic direction, and thus may also be referred to as a geographic operation direction. For example, the geographic operation direction may be denoted by X degrees east by south or X degrees west by north.

101. According to the absolute operation direction, layout of a manipulation environment, and a location of a controlled device in the layout of the manipulation environment, the controlling device determines a target controlled device with which the selected file is shared.

Because a technology of mutual transmission between devices is mostly used indoors, the manipulation environment in this embodiment is typically an indoor environment, such as a home or an office. The layout of the manipulation environment in this embodiment is a structural diagram of a configuration of a manipulation environment in which the controlling device and the controlled device coexist.

102. The controlling device transmits the selected file to the target controlled device to share the selected file.

For example, when the controlling device is a tablet computer, the manipulation environment is a home. When the user wants to share a picture in the tablet computer with a television set and enable the television set to play the shared picture, the user needs to first roughly estimate a direction according to a target controlled device with which the to-be-shared picture is shared, and then pushes the to-be-shared picture toward the direction. The tablet computer recognizes an absolute operation direction of operating the selected file, and determines, according to the absolute operation direction, a home manipulation environment layout, and a location of the controlled device in the layout of the manipulation environment, that the target controlled device with which the to-be-shared picture is shared is the television set. At this time, the tablet computer transmits the to-be-shared picture to the television set, and the television set plays the shared picture. In the technical solution in this embodiment, the selected file is the picture, and the controlling device is the tablet computer. However, the selected file in this embodiment of the present invention includes but is not limited to the picture; and the controlling device includes but is not limited to the tablet computer, for example, may also include a mobile terminal such as a mobile phone with a touchscreen. In practical application, the controlling device may be any device with a touchscreen.

Optionally, when the manipulation environment has more than one layer of space, each layer corresponds to layout of a manipulation environment. A layer at which the controlling device is located is determined using barometric pressure value information obtained by using a sensor of the controlling device, and then the controlling device switches the current manipulation environment layout to layout of a manipulation environment corresponding to the current layer, and then continues to perform step 101.

According to a file transmission method provided in this embodiment, a controlling device recognizes an absolute operation direction of operating a selected file; and determines, according to the absolute operation direction, layout of a manipulation environment, and a location of a controlled device in the layout of the manipulation environment, a target controlled device with which the selected file is shared, where the layout of the manipulation environment is a structural diagram of a configuration of a manipulation environment in which the controlling device and the controlled device coexist; and transmits the selected file to the target controlled device to share the selected file. According to the foregoing technical solution in this embodiment, when a file is transmitted between devices, a user does not need to memorize a model, a name, an icon or a customized identifier of each controlled device, and can transmit a selected file to a controlled device simply by pushing the selected file on the controlling device toward the target controlled device, so that the selected file is transmitted to and shared with the controlled device. The technical solution in this embodiment is easy to implement and facilitate an operation, and can effectively improve user experience.

Optionally, on the basis of the embodiment shown in FIG. 1, before the step 101 "According to the absolute operation direction, layout of a manipulation environment, and a location of a controlled device in the layout of the manipulation environment, the controlling device determines a target controlled device with which the selected file is shared", the method may further include: acquiring, by the controlling device, the layout of the manipulation environment. Preferably, the step of "acquiring, by the controlling device, the layout of the manipulation environment" is also performed before step 100.

Further, optionally, the acquiring, by the controlling device, the layout of the manipulation environment may specifically further include the following manner: acquiring, by the controlling device, the layout of the manipulation environment from a cloud side or a network side, or creating, by the controlling device, the layout of the manipulation environment.

For example, using a sensor such as an electronic compass, a gyroscope, or an acceleration sensor (or an integrated sensor may have standard configuration, where the sensor integrates the electronic compass, the gyroscope, the acceleration sensor, and the like to function as a component, such as a 10-axis sensor) that is in standard configuration of a digital device such as a mobile phone or a tablet computer can already implement an indoor navigation function and determine the layout of the manipulation environment. Alternatively, indoor navigation may also be implemented with the assistance of an external device. For example, the indoor navigation is implemented by Google map 6.0. When GPS is enabled on a device 1 and the device is located successfully and gains access to a radio signal, the device has a unique Media Access Control (Media Access Control, MAC) address regardless of a radio access point (Access Point, AP) such as a radio router. Therefore, the device 1 opens a Google map by means of the radio AP. The map is downloaded, and at the same time geographic information and the MAC of the radio AP are uploaded. In this way, when another device uses this AP to connect to the network next time to exchange data with a Google map server, the server preferentially sends a geographic location of this MAC to the device, and can implement locating without using the GPS. With a mobile phone, all wifi signals can be searched out, indoor locating is implemented comprehensively, and the layout of the manipulation environment is determined. Alternatively, an external sensor may also be used to specially implement locating between devices. For example, in an indoor navigation system of Nokia, multiple location signal transceiver apparatuses are used to form a network in place of a function of a "navigation satellite". These apparatuses may be disposed on a ceiling and may implement real-time tracking for a target and determine layout of a manipulation environment. A maximum precision of this technology can reach 30 cm.

When the layout of the manipulation environment failed to be acquired, further, optionally, layout of a manipulation environment may also be created in this embodiment of the present invention. For example, the controlling device creates the layout of the manipulation environment. The following gives description by using an example in which sensors such as an electronic compass, a gyroscope, and an acceleration sensor are in standard configuration of a mobile phone. Specifically, the following steps may be included:
(1) The controlling device acquires movement distance information according to an acceleration value acquired by an acceleration sensor.
   For example, the controlling device may obtain the movement distance information by performing quadratic integral according to the acceleration value that is acquired by the acceleration sensor.
(2) The controlling device acquires movement direction information of the controlling device according to the electronic compass.
(3) The controlling device acquires a movement track according to the movement distance information and the movement direction information.
(4) The controlling device obtains the layout of the manipulation environment of a manipulation environment by recording the movement track of moving in a circle around a rim of the manipulation environment.

Further, optionally, a process in which the controlling device creates the layout of the manipulation environment in this embodiment may also be implemented using other manners in the prior art. For example, (1) comprehensive measurement may be performed by using the acceleration sensor, a barometric pressure sensor, and the electronic compass, or the layout of the manipulation environment may be created by using an integrated and more precise 10-axis sensor; (2) also, measurement may be performed by using a difference between relative signal strengths, that is, the layout of the manipulation environment is created by using a triangular locating manner of a base station; and also, (3) a signal may be transferred by using a sensing device, where each device (a controlling device and each controlled device) reports its own distance and location that are relative to the sensing device to the sensing device, and the sensing device delivers location information of all devices within a working scope to each device, performs a relative operation, and finds and finally determines relative locations between the devices. By setting the devices at a rim of the manipulation environment, the layout of the manipulation environment can be created. The foregoing manner of creating the layout of the manipulation environment is covered in the prior art. For details, reference may be made to related prior art, which is not described here repeatedly.

Implementation manners used by the controlling device to create the layout of the manipulation environment in practical application are not limited to the foregoing types, and the layout of the manipulation environment may also be created according to other manners in the prior art, which is not described here repeatedly in detail.

Further, optionally, on the basis of the technical solution in the foregoing embodiment, after the acquiring, by the controlling device, the layout of the manipulation environment and before the determining, by the controlling device, according to the absolute operation direction, layout of a manipulation environment, and a location of a controlled device in the layout of the manipulation environment, a target controlled device with which the selected file is shared, the method may further include: identifying, by the controlling device, the location of the controlled device in the layout of the manipulation environment. For example, specifically, coordinates may be used to express the location of the controlled device in the layout of the manipulation environment, and the location of the controlled device in the layout of the manipulation environment is stored in the controlling device. A location of each controlled device may also be determined by using the manner of creating the layout of the manipulation environment. By moving the controlling device, a relative location of the controlled device in the manipulation environment can be measured, for example, by using the acceleration sensor and the electronic compass in the controlling device. Similarly, the relative location of the controlled device in the manipulation environment may be identified by referring to other conventional manners of creating the manipulation manner, which is not described here repeatedly. To facilitate identification of the relative location of each controlled device, a center of the manipulation environment may be defined as an origin. Therefore, the location of each controlled device in the manipulation environment is identified by using this origin as a base point. It should be noted that in the foregoing technical solution, each controlled device is fixed and immovable in the manipulation environment.

FIG. 2 is a schematic diagram of a manipulation environment W according to an embodiment of the present invention. For example, in a controlling device, coordinates may be assigned to W according to actual east, south, west and north. A two-dimensional coordinate axis is generated by using a center point of W as an origin and using a recognition precision N as a minimum unit. Therefore, it can be learned that coordinates of La are (3, 4), whose unit is the recognition precision N. A controlled device is disposed at the location of La. Analogically, coordinates of other devices such as Lb and Lc are obtained and recorded in the controlling device. It should be noted that a shape of an outer rim of the manipulation environment W is unrestricted.

For example, specifically, when the controlling device is a mobile phone with a touchscreen, an initial location Lo of the mobile phone in layout of a manipulation environment is automatically acquired when the mobile phone is powered on; or a user sets a current location of the mobile phone in the layout of the manipulation environment as the initial location Lo, records coordinates corresponding to Lo, and at the same time enables functions of an acceleration sensor and an electronic compass. Then, the mobile phone acquires a movement direction and a distance of the mobile phone according to the acceleration sensor and the electronic compass at intervals of an update period of time T. According to a comparison with the initial location Lo, a current location Lx of the mobile phone in the layout of the manipulation environment is learnt. For example, the mobile phone moves 5N along 30° northeast after the initial location Lo is set. Therefore, according to the Pythagorean theorem, it is deduced that the mobile phone moves 4N east and moves 3N north. If the initial location of Lo is northwest of the origin and the coordinates are (1, -2), Lx is (4, 2) in this case, and so on. In a process of waiting for operation, a calculated current coordinate location of the mobile phone is continuously updated at intervals of the update period of time T. The layout of the manipulation environment of the manipulation environment is obtained by recording the movement track of moving in a circle around a rim of the manipulation environment using the manner described in the foregoing embodiment. In addition, a coordinate location of each controlled device in the manipulation environment may also be identified using the manner described in the foregoing embodiment, and recorded in the mobile phone.

Further, optionally, on the basis of the foregoing embodiment, the step 100 "A controlling device recognizes an absolute operation direction of operating a selected file" may specifically include the following steps, which are described by using an example in which a sensor such as an electronic compass is in standard configuration of a mobile phone:
(a) The controlling device recognizes an operation direction of operating the selected file on a display screen of the controlling device.
(b) The controlling device determines a current geographic direction according to the electronic compass.
(c) The controlling device determines, according to the operation direction in which a user performs an operation on the selected file on the display screen of the controlling device and the current geographic direction, the absolute operation direction of operating the selected file.

For example, by recognizing a direction of a user operation relative to the mobile phone screen and according to the current geographic direction recognized by the electronic compass, the controlling device recognizes the user's operation direction as a specific absolute operation direction.

Further, optionally, on the basis of the foregoing embodiment, step 101 "According to the absolute operation direction and a location of a controlled device in the layout of the manipulation environment, the controlling device determines a target controlled device with which the selected file is shared" may specifically include the following steps:
(i) In the layout of the manipulation environment, the controlling device acquires a reference area, where the reference area is an area determined by using the absolute operation direction as an angle bisector or a side of an angle and by using an identification scope of a vertex angle as an angle.
   For example, the identification scope of the vertex angle may be set to any angle between 0 and 30 degrees according to actual requirements, and may preferably be 5 to 10 degrees. Specifically, the reference area may be a cone that uses a start point of operating the selected file on a display screen of the controlling device as a vertex, uses the absolute operation direction as an angle bisector, and uses the identification scope of the vertex angle as an angle; or may also be a cone that uses a start point of operating the selected file on a display screen of the controlling device as a vertex, uses the absolute operation direction as a side of an angle, and uses the identification scope of the vertex angle as the angle; or may also be a cone that uses a start point of operating the selected file on a display screen of the controlling device as a vertex, uses the absolute operation direction as a straight line in an angle, and uses the identification scope of the vertex angle as the angle.
(ii) The controlling device acquires a controlled device in the reference area according to the location of the controlled device in the layout of the manipulation environment.
(iii) The controlling device uses the controlled device in the reference area as the target controlled device with which the selected file is shared.

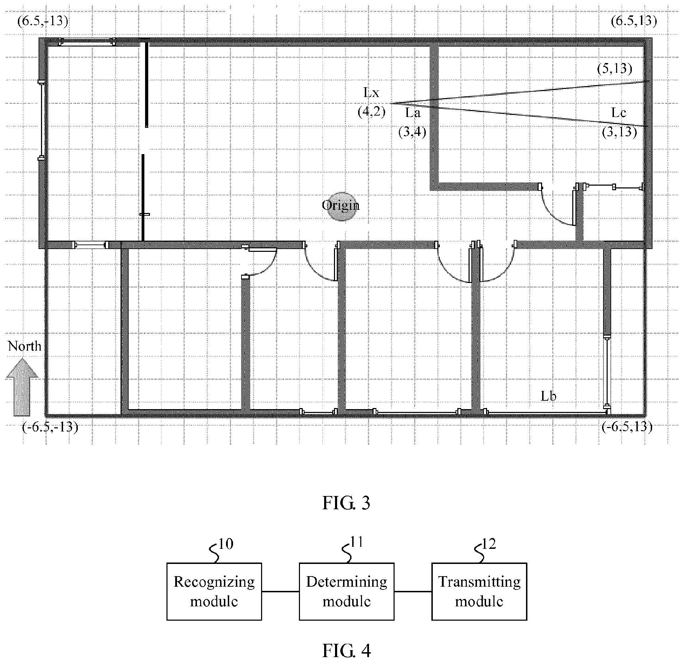

FIG. 3 is a status diagram of the manipulation environment W shown in FIG. 2. The following gives description by using an example in which sensors such as an electronic compass, a gyroscope, and an acceleration sensor are in standard configuration of a mobile phone. As shown in FIG. 3, a controlling device is a mobile phone with a touchscreen. When a user drags a to-be-shared file to a specific direction, the mobile phone recognizes the direction of the user operation relative to a mobile phone screen and the electronic compass recognizes a direction to which the mobile phone is currently facing, and the mobile phone recognizes the user's operation direction as a specific absolute operation direction. A reference area of the mobile phone is a cone that uses a current location Lx as a vertex, uses an absolute operation direction P as a vertical line, and uses an identification scope D as a degree of a vertex angle. However, as shown in FIG. 3, considering that the manipulation environment W is closed space with an outer rim and that a controlled device never appears outside a layout of the manipulation environment W, a base side of the reference area of the cone should be the outer rim of the manipulation environment W. Coordinates of locations La, Lb, and Lc...of other devices are compared, and a controlled device within this scope is possible a target controlled device of the user operation.

For example, the current location Lx of the mobile phone is (4, 2). The electronic compass recognizes that the user is dragging a file eastward, the identification scope D is 10°, and a current layout coordinate state is shown in the schematic diagram FIG. 3. A system matching scope is to find a cone whose vertex is Lx (4, 2) and whose vertex angle is 10°. As calculated, a scope of a triangle covered by a cone section is (4, 2) (5, 13) (3, 13). Therefore, according to previous records of device coordinates, Lc (3, 13) falls within this scope, and it may be determined that the user operation is for Lc. That is, it indicates that the selected file in the current mobile phone is shared with the target controlled device at the Lc location.

Further, it should be noted that when the reference area includes at least two controlled devices, the controlling device displays display identifiers of the at least two controlled devices; the controlling device detects information about a selected controlled device; and the controlling device uses the selected controlled device as the target controlled device with which the selected file is shared.

The information about the selected controlled device is information about the controlled device that is selected by the user. Specifically, the user may select one controlled device by using a touchscreen of the controlling device, and the controlling device detects and determines the information about the controlled device selected by the user, and uses the controlled device as the target controlled device with which the selected file is shared.

It should be noted that if no related controlled device exists in the current direction, the controlling device may accordingly prompt the user (for example, display related prompt information on the touchscreen), and wait for the user to operate.

It should be noted that various solutions in the foregoing embodiment may be combined in any manner to form an optional technical solution of the embodiment of the present invention, which is not described here repeatedly.

According to a file transmission method in the foregoing embodiment, when a file is transmitted between devices, a user does not need to memorize a model, a name, an icon or a customized identifier of each controlled device, and can transmit a selected file to a controlled device simply by pushing the selected file on the controlling device toward the target controlled device, thereby implementing transmission and sharing of the selected file to the controlled device. The technical solution in the embodiment is easy to implement and facilitate an operation, and can effectively improve user experience.

A person of ordinary skill in the art may understand that, all or part of the steps for implementing the foregoing method embodiments may be implemented by a program instructing relevant hardware. The program may be stored in a computer readable storage medium. When the program is executed, the steps that include the foregoing method embodiments are performed. The storage medium includes various media capable of storing program codes, such as a ROM, a RAM, a magnetic disk, or an optical disc.

FIG. 4 is a schematic structural diagram of a controlling device according to an embodiment of the present invention. As shown in FIG. 4, the controlling device in this embodiment may specifically include an identifying module 10, a determining module 11, and a transmitting module 12.

The recognizing module 10 is configured to recognize an absolute operation direction of operating a selected file; the determining module 11 is connected to the recognizing module 10, and the determining module 11 is configured to determine, according to the absolute operation direction recognized by the recognizing module 10, layout of a manipulation environment, and a location of a controlled device in the layout of the manipulation environment, a target controlled device with which the selected file is shared, where the layout of the manipulation environment is a structural diagram of a configuration of a manipulation environment in which the controlling device and the controlled device coexist; and the transmitting module 12 is connected to the determining module 11, and the transmitting module 12 is configured to transmit the selected file to the target controlled device determined by the determining module 11, so as to share the selected file.

The controlling device in this embodiment uses the foregoing modules to implement file transmission, which is based on the same file transmission mechanism as that of the foregoing related method embodiment. For details, reference may be made to the description in the method embodiment, which is not described here repeatedly.

Optionally, when the manipulation environment has more than one layer of space, each layer corresponds to layout of a manipulation environment. The recognizing module is further configured to obtain barometric pressure value information and determine the layer at which the controlling device is located, and then switch the current manipulation environment layout to layout of a manipulation environment corresponding to the current layer.

A controlling device in this embodiment uses the foregoing modules to recognize an absolute operation direction of operating a selected file; determines, according to the absolute operation direction, layout of a manipulation environment, and a location of a controlled device in the layout of the manipulation environment, a target controlled device with which the selected file is shared; and transmits the selected file to the target controlled device to share the selected file. According to the foregoing technical solution in this embodiment, when a file is transmitted between devices, a user does not need to memorize a model, a name, an icon or a customized identifier of each controlled device, and can transmit a selected file to a controlled device simply by pushing the selected file on the controlling device toward the target controlled device, so that the selected file is transmitted to and shared with the controlled device. The technical solution in this embodiment is easy to implement and facilitate an operation, and can effectively improve user experience.

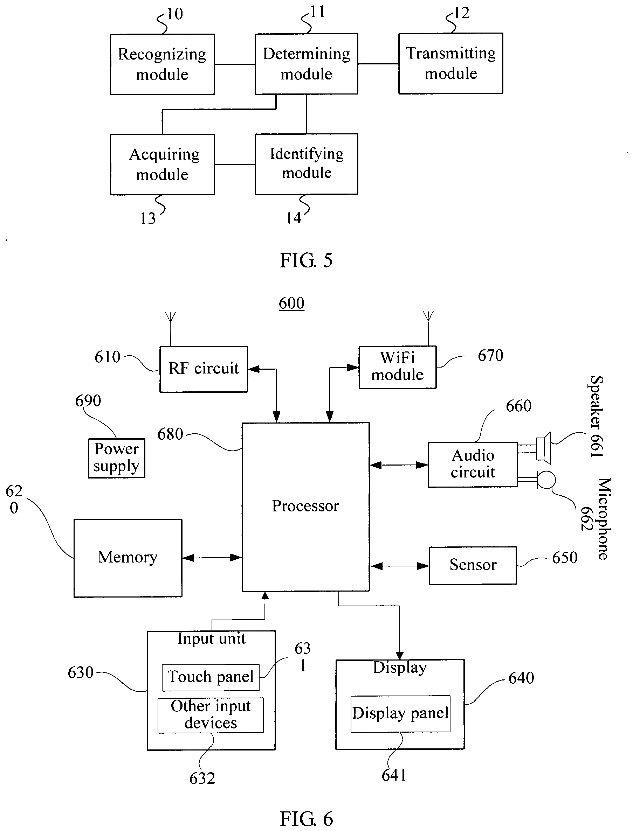

FIG. 5 is a schematic structural diagram of a controlling device according to another embodiment of the present invention. As shown in FIG. 5, on the basis of the embodiment shown in FIG. 4, the controlling device in this embodiment may further include the following technical solution:
As shown in FIG. 5, the controlling device in this embodiment may further include an acquiring module 13. The acquiring module 13 is connected to the determining module 11, and the acquiring module 13 is configured to acquire the layout of the manipulation environment before the determining module 11 determines, according to the absolute operation direction, the layout of the manipulation environment, and the location of the controlled device in the layout of the manipulation environment, the target controlled device with which the selected file is shared. At this time, according to the absolute operation direction recognized by the recognizing module 10, the layout of the manipulation environment acquired by the acquiring module 13, and the location of the controlled device in the layout of the manipulation environment, the corresponding determining module 11 determines the controlled device with which the selected file is shared.

Further, optionally, the acquiring module 13 is specifically configured to acquire the layout of the manipulation environment from a cloud side or a network side, or is specifically configured to create the layout of the manipulation environment.

Further, optionally, the acquiring module 13 is specifically configured to acquire movement distance information according to an acceleration value acquired by an acceleration sensor. The following gives description by using an example in which sensors such as an electronic compass, a gyroscope, and an acceleration sensor are in standard configuration of a mobile phone. For example, the acquiring module 13 is specifically configured to obtain the movement distance information by performing quadratic integral according to the acceleration value acquired by the acceleration sensor; acquire movement direction information of the controlling device according to the electronic compass; acquire a movement track according to the movement distance information and the movement direction information of the controlling device; and obtain the layout of the manipulation environment of a manipulation environment by recording the movement track of moving in a circle around a rim of the manipulation environment.

Further, optionally, as shown in FIG. 5, the controlling device in this embodiment further includes an identifying module 14. The identifying module 14 is separately connected to the acquiring module 13 and the determining module 11, and the identifying module 14 is configured to identify the location of the controlled device in the layout of the manipulation environment after the acquiring module 13 acquires the layout of the manipulation environment and before the determining module 11 determines, according to the absolute operation direction, the layout of the manipulation environment, and the location of the controlled device in the layout of the manipulation environment, the target controlled device with which the selected file is shared, where the layout of the manipulation environment is acquired by the acquiring module 13. In this case, according to the absolute operation direction recognized by the recognizing module 10, the layout of the manipulation environment acquired by the acquiring module 13, and the location of the controlled device in the layout of the manipulation environment, the corresponding determining module 11 determines the controlled device with which the selected file is shared, where the location is identified by the identifying module 14.

Further, optionally, the recognizing module 10 in the controlling device in this embodiment is specifically configured to recognize an operation direction of operating the selected file on a display screen of the controlling device; determine a current geographic direction according to the electronic compass; and, determine, according to the operation direction in which a user performs an operation on the selected file on the display screen of the controlling device and the current geographic direction, the absolute operation direction of operating the selected file.

Further, optionally, the determining module 11 in the controlling device in this embodiment is specifically configured to: acquire a reference area of the location of the controlled device, where the reference area is an area determined by using an operation start point of the selected file on the display screen of the controlling device as a vertex, by using the absolute operation direction as an angle bisector or a side of an angle, and by using an identification scope of a vertex angle as an angle; acquire a controlled device in the reference area according to the location of the controlled device in the layout of the manipulation environment, where the location is identified by the identifying module 14; and use the controlled device in the reference area as the target controlled device with which the selected file is shared.

Further, optionally, the determining module 11 in the controlling device in this embodiment is further configured to: when the reference area includes at least two controlled devices, display display identifiers of the at least two controlled devices; detect information about a selected controlled device; and use the selected controlled device as the target controlled device with which the selected file is shared.

The embodiment shown in FIG. 5 describes the technical solution of the present invention by using an example in which various aforementioned solutions are included. In practical application, the various aforementioned technical solutions may be combined in any manner to form an optional technical solution of the embodiment of the present invention, which is not described here repeatedly.

The controlling device in this embodiment uses the foregoing modules to implement file transmission, which is based on the same file transmission mechanism as that of the foregoing related method embodiment. For details, reference may be made to the description in the method embodiment, which is not described here repeatedly.

According to a controlling device, in this embodiment, which uses the foregoing modules, when a file is transmitted between devices, a user does not need to memorize a model, a name, an icon or a customized identifier of each controlled device, and can transmit a selected file to a controlled device simply by pushing the selected file on the controlling device toward the target controlled device, so that the selected file is transmitted to and shared with the controlled device. The technical solution in this embodiment is easy to implement and facilitate an operation, and can effectively improve user experience.

FIG. 6 is a schematic structural diagram of a mobile terminal used as a controlling device according to an embodiment of the present invention. The mobile terminal in this embodiment may include a mobile phone, a tablet computer, a PDA (Personal Digital Assistant, personal digital assistant), a POS (Point of Sales, point of sales), or a vehicle-mounted computer, or the like.

Using a mobile phone as an example of the mobile terminal, FIG. 6 is a block diagram of a partial structure of a mobile phone 600 related to this embodiment of the present invention. Referring to FIG. 6, the mobile phone 600 includes components such as an RF (Radio Frequency, radio frequency) circuit 610, a memory 620, an input unit 630, a display 640, a sensor 650, an audio circuit 660, a WiFi (wireless fidelity, wireless fidelity) module 670, a processor 680, and a power supply 690. A person skilled in the art may understand that the mobile phone structure shown in FIG. 6 constitutes no limitation on the mobile phone, and the mobile phone may include more or fewer components than the shown components, some components may be combined, or the components may be disposed differently.

The following describes each integral part of the mobile phone 600 in detail with reference to FIG. 6:

The RF circuit 610 may be configured to receive and send a signal in an information sending or receiving process or a call process, and in particular, after receiving downlink information of a base station, send the downlink information to the processor 680 for processing; and in addition, send designed uplink data to the base station. Generally, the RF circuit includes but is not limited to an antenna, at least one amplifier, a transceiver, a coupler, an LNA (Low Noise Amplifier, low noise amplifier), a duplexer, and the like. In addition, the RF circuit 610 may also communicate with a network and other devices by means of radio communication. The radio communication may use any communication standard or protocol, including but not limited to GSM (Global System of Mobile communication, Global System of Mobile Communications), GPRS (General Packet Radio Service, General Packet Radio Service), CDMA (Code Division Multiple Access, Code Division Multiple Access), WCDMA (Wideband Code Division Multiple Access, Wideband Code Division Multiple Access), LTE (Long Term Evolution, Long Term Evolution), email, SMS (Short Messaging Service, short messaging service), and the like.

The memory 620 may be configured to store a software program and a module, and the processor 680 executes various function applications of the mobile phone 600 and performs data processing by running the software program and the module that are stored in the memory 620. The memory 620 may primarily include a program storage area and a data storage area, where the program storage area may store an operating system, and an application required by at least one function (such as an audio playback function or a video playback function), and the like; and the data storage area may store data (such as audio data or a phone book) created according to use of the mobile phone 600, and the like. In addition, the memory 620 may include a high-speed random access memory, and may further include a non-volatile memory, for example, at least one disk memory component, one flash memory component, or another volatile solid-state memory component.

The input unit 630 may be configured to receive an entered numeral or character information, and generate a key signal input related to a user setting and function control of the mobile phone 600. Specifically, the input unit 630 may include a touch panel 631 and other input devices 632. The touch panel 631 is also referred to as a touchscreen and can collect a touch operation (such as an operation performed by a user on the touch panel 631 or near the touch panel 631 by using a finger or any proper object or accessory such as a stylus) on or near the touch panel, and drive a corresponding connection apparatus according to a preset program. Optionally, the touch panel 631 may include two parts: a touch detection apparatus and a touch controller. The touch detection apparatus detects a touch position of the user, detects a signal brought by the touch operation, and sends the signal to the touch controller. The touch controller receives touch information from the touch detection apparatus, converts the touch information into touch coordinates, and sends the touch coordinates to the processor 680, and can receive a command sent by the processor 680 and execute the command. In addition, the touch panel 631 may be implemented in multiple types, such as resistive, capacitive, infrared, and surface acoustic wave. The input unit 630 may include other input devices 632 in addition to the touch panel 631. Specifically, other input devices 632 may include but are not limited to one or more among a physical keyboard, a function key (such as a volume control key or a switch key), a trackball, a mouse, a joystick, or the like.

The display 640 may be configured to display information entered by the user or information provided for the user, and various menus of the mobile phone 600. The display 640 may include a display panel 641. Optionally, the display panel 641 may be configured in a form such as an LCD (Liquid Crystal Display, liquid crystal display) or an OLED (Organic Light-Emitting Diode, organic light-emitting diode). Further, the touch panel 631 may cover the display panel 641. When detecting a touch operation on or near the touch panel, the touch panel 631 transmits the touch operation to the processor 680 to determine a type of a touch event, and then the processor 680 provides a corresponding visual output on the display panel 641 according to the type of the touch event. Although the touch panel 631 and the display panel 641 in FIG. 6 are used as two independent parts to implement input and output functions of the mobile phone 600, in some embodiments, the touch panel 631 and the display panel 641 may be integrated to implement the input and output functions of the mobile phone 600.

The mobile phone 600 may further include at least one sensor 650, such as an electronic compass, a gyroscope, or an acceleration sensor, and the sensor may be an integrated sensor that integrates the electronic compass, the gyroscope, the acceleration sensor, and the like to function as a component, such as a 10-axis sensor. Specifically, an optical sensor may include an environment optical sensor and an proximity sensor. The environment optical sensor may adjust luminance of the display panel 641 according to brightness or dimness of environment light, and the approach sensor may close the display panel 641 or backlight or both when the mobile phone 600 approaches an ear. As a type of motion sensor, the acceleration sensor can detect an acceleration value in each direction (generally three axes), and detect a value and a direction of gravity when the acceleration sensor is static, and is applicable to an application for recognizing a mobile phone posture (for example, a switch between landscape and portrait screens, related games, and magnetometer posture calibration), a function related to vibration recognition (such as a pedometer or a knock), and the like. Other sensors such as a gyroscope, a barometer, a hygrometer, a thermometer, and an infrared sensor may also be disposed on the mobile phone 600, which is not described here repeatedly.

An audio circuit 660, a speaker 661, and a microphone 662 may provide audio interfaces between the user and the mobile phone 600. The audio circuit 660 may transmit an electric signal to the speaker 661, where the electric signal is a result of converting received audio data, and the speaker 661 converts the electric signal into a sound signal for outputting. In another aspect, the microphone 662 converts a collected sound signal into an electric signal, and the audio circuit 660 receives the electric signal and converts it into audio data, and then outputs the audio data to an RF circuit 608 so that the audio data is sent to, for example, another mobile phone, or the audio data is output to a memory 620 for further processing.

WiFi is a short-distance radio transmission technology. The mobile phone 600 uses a WiFi module 670 to help the user send and receive an email, browse a web page, gain access to streaming media, and the like. The WiFi module provides the user with wireless broadband Internet access. Although FIG. 6 shows the WiFi module 670, understandably the WiFi module is not a mandatory part of the mobile phone 600, and may completely be omitted according to a requirement without changing the essence of the present invention.

The processor 680 is a control center of the mobile phone 600, and uses various interfaces and lines to connect all parts of the entire mobile phone. By running or executing a software program or a module or both that are stored in the memory 620 and invoking data stored in the memory 620, the processor executes various functions of the mobile phone 600 and processes data so as to perform overall monitoring on the mobile phone. Optionally, the processor 680 may include one or more processing units. Preferably, an application processor and a modem processor may be integrated into the processor 680, where the application processor primarily processes an operating system, a user interface, an application, and the like; and the modem processor primarily handles radio communication. Understandably, the modem processor is not necessarily integrated into the processor 180.

The mobile phone 600 further includes a power supply 690 (such as a battery) that supplies power to each component. Preferably, the power supply may be logically connected to the processor 680 by using a power supply management system. In this way, functions such as management of charging, discharging, and power consumption are implemented by using the power supply management system.

The mobile phone 600 may further include a camera, a Bluetooth module, and the like, which are not shown in the diagram though and are not described here repeatedly.

The processor 680 recognizes an absolute operation direction of operating a selected file; and determines, according to the recognized absolute operation direction, layout of a manipulation environment, and a location of a controlled device in the layout of the manipulation environment, a target controlled device with which the selected file is shared; and transmits the selected file to the determined target controlled device to share the selected file. The layout of the manipulation environment is a structural diagram of a configuration of a manipulation environment in which the controlling device and the controlled device coexist.

Optionally, the processor 680 may further acquire the layout of the manipulation environment before determining, according to the absolute operation direction, the layout of the manipulation environment, and the location of the target controlled device in the layout of the manipulation environment, the controlled device with which the selected file is shared.

For example, the processor 680 may acquire the layout of the manipulation environment from a cloud side or a network side, or the processor 680 may specifically create the layout of the manipulation environment.

Optionally, the processor 680 may specifically acquire movement distance information according to the acceleration value acquired by the acceleration sensor (for example, specifically, obtain the movement distance information by performing quadratic integral according to the acceleration value acquired by the acceleration sensor); acquire movement direction information of the controlling device according to the electronic compass; acquire a movement track according to the movement distance information and the movement direction information of the controlling device; and obtain the layout of the manipulation environment of a manipulation environment by recording the movement track of moving in a circle around a rim of the manipulation environment.

Optionally, the processor 680 may identify the location of the controlled device in the acquired manipulation environment layout after acquiring the layout of the manipulation environment and before determining, according to the absolute operation direction, the layout of the manipulation environment, and the location of the controlled device in the layout of the manipulation environment, the target controlled device with which the selected file is shared.

Optionally, the processor 680 may further recognize an operation direction of operating the selected file on a display screen of the controlling device; determine a current geographic direction according to the electronic compass; and determine, according to the operation direction in which a user performs an operation on the selected file on the display screen of the controlling device and the current geographic direction, the absolute operation direction of operating the selected file.

Optionally, the processor 680 may further acquire a reference area of the location of the controlled device, where the reference area is an area determined by using an operation start point of the selected file on the display screen of the controlling device as a vertex, by using the absolute operation direction as an angle bisector or a side of an angle, and by using an identification scope of a vertex angle as an angle; acquire a controlled device in the reference area according to the identified location of the controlled device in the layout of the manipulation environment; and use the controlled device in the reference area as the target controlled device with which the selected file is shared.

Further, optionally, when the reference area includes at least two controlled devices, the display 640 may display display identifiers of the at least two controlled devices; and the processor 680 detects information about a selected controlled device and uses the selected controlled device as the target controlled device with which the selected file is shared.

Optionally, when the manipulation environment has more than one layer of space, each layer corresponds to layout of a manipulation environment. The processor 680 is further configured to receive barometric pressure value information sent by the sensor and determine the layer at which the controlling device is located, and then switch the current manipulation environment layout to layout of a manipulation environment corresponding to the current layer.

According to a mobile terminal in the foregoing embodiment, a processor recognizes an absolute operation direction of operating a selected file; and determines, according to the absolute operation direction, layout of a manipulation environment, and a location of a controlled device in the layout of the manipulation environment, a target controlled device with which the selected file is shared, where the layout of the manipulation environment is a structural diagram of a configuration of a manipulation environment in which the controlling device and the controlled device coexist; and transmits the selected file to the target controlled device to share the selected file. According to the foregoing technical solution in this embodiment, when a file is transmitted between devices, a user does not need to memorize a model, a name, an icon or a customized identifier of each controlled device, and can transmit a selected file to a controlled device simply by pushing the selected file on the controlling device toward the target controlled device, so that the selected file is transmitted to and shared with the controlled device. The technical solution in this embodiment is easy to implement and facilitate an operation, and can effectively improve user experience.

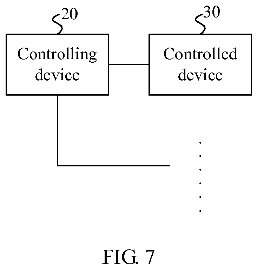

FIG. 7 is a structural diagram of a file transmission system according to an embodiment of the present invention. As shown in FIG. 7, the file transmission system in this embodiment includes a controlling device 20 and at least one controlled device 30, where the controlling device 20 and the at least one controlled device 30 are in a same manipulation environment. The controlling device 20 may have a communication connection with the at least one controlled device 30, and send the selected file to the controlled device 30 to share the selected file.

The controlling device 20 is configured to: recognize an absolute operation direction of operating a selected file; determine, according to the recognized absolute operation direction, layout of a manipulation environment, and a location of at least one controlled device in the layout of the manipulation environment, a target controlled device with which the selected file is shared; and transmit the selected file to the determined target controlled device to share the selected file.

Specifically, the controlling device 20 is the controlling device shown in FIG. 4, FIG. 5, or FIG. 6. Specifically, the controlling device may be a controlling device described in the embodiment shown in FIG. 1 and subsequent optional embodiments.

The file transmission system in this embodiment uses the controlling device to implement file transmission, which is based on the same file transmission mechanism as that of the foregoing related method embodiment. For details, reference may be made to the description in the method embodiment, which is not described here repeatedly.

A file transmission system in this embodiment uses the foregoing controlling device to recognize an absolute operation direction of operating a selected file; determines, according to the absolute operation direction, layout of a manipulation environment, and a location of at least one controlled device in the layout of the manipulation environment, a target controlled device with which the selected file is shared; and transmits the selected file to the target controlled device to share the selected file. According to the foregoing technical solution in this embodiment, when a file is transmitted between devices, a user does not need to memorize a model, a name, an icon or a customized identifier of each controlled device, and can transmit a selected file to a controlled device simply by pushing the selected file on the controlling device toward the target controlled device, so that the selected file is transmitted to and shared with the controlled device. The technical solution in this embodiment is easy to implement and facilitate an operation, and can effectively improve user experience.

The controlling device in this embodiment of the present invention may be a tablet computer, a mobile phone with a touchscreen, or the like; and the controlled device may be an acoustic system, a television set, or a desktop computer or the like, or may be a mobile phone with a touchscreen, a mobile phone with an ordinary screen (that is, a mobile phone with a non-touchscreen), or a tablet computer, or the like.

The apparatus embodiment described above is merely illustrative; the units described as separate parts may or may not be physically separate, and the parts displayed as units may or may not be physical units, may be located in one location, or may be distributed on at least two network units; and a part or all of the modules may be selected according to actual needs to achieve the objectives of the solutions of the embodiments, which may be understood and implemented by a person of ordinary skill in the art without making creative efforts.

Finally, it should be noted that the foregoing embodiments are merely intended for describing the technical solutions of the present invention instead of limiting the present invention. Although the present invention is described in detail with reference to the foregoing embodiments, a person of ordinary skill in the art should understand that modifications may still be made to the technical solutions described in the foregoing embodiments or equivalent replacements may be made to some technical features thereof without departing from the scope of the technical solutions of the embodiments of the present invention.

## Claims

1. A file transmission method, comprising:
recognizing, by a controlling device, an absolute operation direction of operating a selected file;
determining, by the controlling device according to the absolute operation direction, layout of a manipulation environment, and a location of a controlled device in the layout of the manipulation environment, a target controlled device with which the selected file is shared, wherein the layout of the manipulation environment is a structural diagram of a configuration of a manipulation environment in which the controlling device and the controlled device coexist; and
transmitting, by the controlling device, the selected file to the target controlled device to share the selected file,
wherein before the determining, by the controlling device according to the absolute operation direction, layout of a manipulation environment, and a location of a controlled device in the layout of the manipulation environment, a target controlled device with which the selected file is shared, the method further comprises:
acquiring, by the controlling device, the layout of the manipulation environment,
wherein the acquiring, by the controlling device, the layout of the manipulation environment comprises:
creating, by the controlling device, the layout of the manipulation environment,
wherein the creating, by the controlling device, the layout of the manipulation environment comprises:
acquiring, by the controlling device, movement distance information according to an acceleration value acquired by a sensor;
acquiring, by the controlling device, movement direction information of the controlling device according to the sensor;
acquiring, by the controlling device, a movement track according to the movement distance information and the movement direction information; and
obtaining, by the controlling device, the layout of the manipulation environment by recording the movement track of moving in a circle around a rim of the manipulation environment.

2. The method according to claim 1, wherein after the acquiring, by the controlling device, the layout of the manipulation environment and before the determining, by the controlling device according to the absolute operation direction, layout of a manipulation environment, and a location of a controlled device in the layout of the manipulation environment, a target controlled device with which the selected file is shared, the method further comprises:
identifying, by the controlling device, the location of the controlled device in the layout of the manipulation environment.

3. The method according to claim 2, wherein the recognizing, by a controlling device, an absolute operation direction of operating a selected file comprises:
recognizing, by the controlling device, an operation direction of operating the selected file on a display screen of the controlling device;
determining, by the controlling device, a current geographic direction according to the sensor; and
determining, by the controlling device according to the operation direction in which a user performs an operation on the selected file on the display screen of the controlling device and the current geographic direction, the absolute operation direction of operating the selected file.

4. The method according to claim 3, wherein the determining, by the controlling device according to the absolute operation direction and a location of a controlled device in the layout of the manipulation environment, a target controlled device with which the selected file is shared comprises:
acquiring, by the controlling device, a reference area of the location of the controlled device, wherein the reference area is an area determined by using an operation start point of the selected file on the display screen of the controlling device as a vertex, by using the absolute operation direction as an angle bisector or a side of an angle, and by using an identification scope of a vertex angle as an angle;
acquiring, by the controlling device, a controlled device in the reference area according to the location of the controlled device in the layout of the manipulation environment; and
using, by the controlling device, the controlled device in the reference area as the target controlled device with which the selected file is shared.

5. The method according to claim 4, wherein the method further comprises:
displaying, by the controlling device when the reference area comprises at least two controlled devices, display identifiers of the at least two controlled devices;
detecting, by the controlling device, information about a selected controlled device; and
using, by the controlling device, the selected controlled device as the target controlled device with which the selected file is shared.

6. A controlling device, comprising:
a recognizing module (10), configured to recognize an absolute operation direction of operating a selected file;
a determining module (11), configured to determine, according to the absolute operation direction, layout of a manipulation environment, and a location of a controlled device in the layout of the manipulation environment, a target controlled device with which the selected file is shared, wherein the layout of the manipulation environment is a structural diagram of a configuration of a manipulation environment in which the controlling device and the controlled device coexist; and
a transmitting module (12), configured to transmit the selected file to the target controlled device to share the selected file,
wherein the controlling device further comprises:
an acquiring module (13), configured to acquire the layout of the manipulation environment before the determining module (11) determines, according to the absolute operation direction, the layout of the manipulation environment, and the location of the controlled device in the layout of the manipulation environment, the target controlled device with which the selected file is shared,
wherein the acquiring module (13) is specifically configured to create the layout of the manipulation environment,
wherein the acquiring module (13) is specifically configured to: acquire movement distance information according to an acceleration value acquired by a sensor; acquire movement direction information of the controlling device according to the sensor; acquire a movement track according to the movement distance information and the movement direction information; and obtain the layout of the manipulation environment of a manipulation environment by recording the movement track of moving in a circle around a rim of the manipulation environment.

7. The device according to claim 6, wherein the device further comprises:
an identifying module (14), configured to identify the location of the controlled device in the layout of the manipulation environment after the acquiring module (13) acquires the layout of the manipulation environment and before the determining module (11) determines, according to the absolute operation direction, the layout of the manipulation environment, and the location of the controlled device in the layout of the manipulation environment, the target controlled device with which the selected file is shared.

8. The device according to claim 7, wherein the recognizing module (10) is specifically configured to recognize an operation direction of operating the selected file on a display screen of the controlling device; determine a current geographic direction according to the sensor; and, determine, according to the operation direction in which a user performs an operation on the selected file on the display screen of the controlling device and the current geographic direction, the absolute operation direction of operating the selected file.

9. The device according to claim 8, wherein the determining module (11) is specifically configured to: acquire a reference area of the location of the controlled device, wherein the reference area is an area determined by using an operation start point of the selected file on the display screen of the controlling device as a vertex, by using the absolute operation direction as an angle bisector or a side of an angle, and by using an identification scope of a vertex angle as an angle; acquire a controlled device in the reference area according to the location of the controlled device in the layout of the manipulation environment; and use the controlled device in the reference area as the target controlled device with which the selected file is shared.

## Patentansprüche

1. Dateiübertragungsverfahren, aufweisend:
Erkennen, durch eine Steuervorrichtung, einer absoluten Betriebsrichtung des Betreibens einer ausgewählten Datei;
Bestimmen, durch die Steuervorrichtung, gemäß der absoluten Betriebsrichtung, einer Anordnung einer Manipulationsumgebung und einem Standort einer gesteuerten Vorrichtung in der Anordnung der Manipulationsumgebung, einer gesteuerten Zielvorrichtung, mit dem die ausgewählte Datei gemeinsam benutzt wird, wobei die Anordnung der Manipulationsumgebung ein Strukturdiagramm einer Konfiguration einer Manipulationsumgebung ist, in dem die Steuervorrichtung und die gesteuerte Vorrichtung koexistieren; und
Übertragen, durch die Steuervorrichtung, der ausgewählten Datei an die gesteuerte Zielvorrichtung zum gemeinsamen Benutzen der Datei,
wobei das Verfahren, vor dem Bestimmen, durch die Steuervorrichtung, gemäß der absoluten Betriebsrichtung, einer Anordnung einer Manipulationsumgebung und einem Standort einer gesteuerten Vorrichtung in der Anordnung der Manipulationsumgebung, einer gesteuerten Zielvorrichtung, mit dem die ausgewählte Datei gemeinsam benutzt wird, ferner aufweist:
Erfassen, durch die Steuervorrichtung, der Anordnung der Manipulationsumgebung, wobei das Erfassen, durch die Steuervorrichtung, der Anordnung der Manipulationsumgebung aufweist:
Erstellen, durch die Steuervorrichtung, der Anordnung der Manipulationsumgebung, wobei das Erstellen, durch die Steuervorrichtung, der Anordnung der Manipulationsumgebung aufweist:
Erfassen, durch die Steuervorrichtung, von Bewegungsdistanzinformation gemäß einem Beschleunigungswert, der durch einen Sensor erfasst wird;
Erfassen, durch die Steuervorrichtung, von Bewegungsrichtungsinformation der Steuervorrichtung gemäß dem Sensor;
Erfassen, durch die Steuervorrichtung, einer Bewegungsbahn gemäß der Bewegungsdistanzinformation und der Bewegungsrichtungsinformation; und
Erhalten, durch die Steuervorrichtung, der Anordnung der Manipulationsumgebung durch Aufzeichnen der Bewegungsbahn der Bewegung in einem Kreis um einen Rand der Manipulationsumgebung.

2. Verfahren nach Anspruch 1, wobei das Verfahren, nach dem Erfassen, durch die Steuervorrichtung, der Anordnung der Manipulationsumgebung, und vor dem Bestimmen, durch die Steuervorrichtung, gemäß der absoluten Betriebsrichtung, einer Anordnung einer Manipulationsumgebung und einem Standort einer gesteuerten Vorrichtung in der Anordnung der Manipulationsumgebung, einer gesteuerten Zielvorrichtung, mit dem die ausgewählte Datei gemeinsam benutzt wird, ferner aufweist:
Identifizieren, durch die Steuervorrichtung, des Standorts der gesteuerten Vorrichtung in der Anordnung der Manipulationsumgebung.

3. Verfahren nach Anspruch 2, wobei das Erkennen, durch eine Steuervorrichtung, einer absoluten Betriebsrichtung des Betreibens einer ausgewählten Datei aufweist:
Erkennen, durch die Steuervorrichtung, einer absoluten Betriebsrichtung des Betreibens der ausgewählten Datei, auf einem Anzeigeschirm der Steuervorrichtung;
Bestimmen, durch die Steuervorrichtung, einer gegenwärtigen geografischen Richtung gemäß dem Sensor; und
Bestimmen, durch die Steuervorrichtung gemäß der Betriebsrichtung, in der ein Benutzer einen Vorgang auf die ausgewählte Datei auf dem Anzeigeschirm der Steuervorrichtung ausführt, und der gegenwärtigen geografischen Richtung, der absoluten Betriebsrichtung des Betreibens der ausgewählten Datei.

4. Verfahren nach Anspruch 3, wobei das Bestimmen, durch die Steuervorrichtung, gemäß der absoluten Betriebsrichtung und einem Standort einer gesteuerten Vorrichtung in der Anordnung der Manipulationsumgebung, einer gesteuerten Zielvorrichtung, mit der die ausgewählte Datei gemeinsam benutzt wird, aufweist:
Erfassen, durch die Steuervorrichtung, eines Referenzbereichs des Standorts der gesteuerten Vorrichtung, wobei der Referenzbereich ein Bereich ist, der unter Verwendung eines Betriebsstartpunkts der ausgewählten Datei auf dem Anzeigeschirm der Steuervorrichtung als ein Scheitel, unter Verwendung der absoluten Betriebsrichtung als eine Winkelhalbierende oder einer Seite des Winkels und unter Verwendung eines Identifikationsumfangs eines Scheitelwinkels als ein Winkel bestimmt wird;
Erfassen, durch die Steuervorrichtung, einer gesteuerten Vorrichtung im Referenzbereich gemäß dem Standort der gesteuerten Vorrichtung in der Anordnung der Manipulationsumgebung; und
Verwenden, durch die Steuervorrichtung, der gesteuerten Vorrichtung im Referenzbereich als die gesteuerte Zielvorrichtung, mit der die ausgewählte Datei gemeinsam benutzt wird.

5. Verfahren nach Anspruch 4, wobei das Verfahren ferner aufweist:
Anzeigen, durch die Steuervorrichtung, wenn der Referenzbereich mindestens zwei gesteuerte Vorrichtungen aufweist, von Kennungen der mindestens zwei gesteuerten Vorrichtungen;
Erkennen, durch die Steuervorrichtung, von Information über eine ausgewählte gesteuerte Vorrichtung; und
Verwenden, durch die Steuervorrichtung, der ausgewählten gesteuerten Vorrichtung als die gesteuerte Zielvorrichtung, mit der die Datei gemeinsam benutzt wird.

6. Steuervorrichtung, aufweisend:
ein Erkennungsmodul (10), das zum Erkennen einer absoluten Betriebsrichtung des Betreibens einer ausgewählten Datei konfiguriert ist;
ein Bestimmungsmodul (11), das zum Bestimmen, gemäß der absoluten Betriebsrichtung, einer Anordnung einer Manipulationsumgebung und einem Standort einer gesteuerten Vorrichtung in der Anordnung der Manipulationsumgebung, einer gesteuerten Zielvorrichtung, mit dem die ausgewählte Datei gemeinsam benutzt wird, konfiguriert ist, wobei die Anordnung der Manipulationsumgebung ein Strukturdiagramm einer Konfiguration einer Manipulationsumgebung ist, in dem die Steuervorrichtung und die gesteuerte Vorrichtung koexistieren; und
ein Übertragungsmodul (12), das zum Übertragen der ausgewählten Datei an die gesteuerte Zielvorrichtung zum gemeinsamen Benutzen der Datei konfiguriert ist, wobei die Steuervorrichtung ferner aufweist:
ein Erfassungsmodul (13), das zum Erfassen der Anordnung der Manipulationsumgebung konfiguriert ist, bevor das Bestimmungsmodul (11) gemäß der absoluten Betriebsrichtung, der Anordnung der Manipulationsumgebung und dem Standort der gesteuerten Vorrichtung in der Anordnung der Manipulationsumgebung die gesteuerte Zielvorrichtung bestimmt, mit dem die ausgewählte Datei gemeinsam benutzt wird,
wobei das Erfassungsmodul (13) spezifisch zum Erstellen der Anordnung der Manipulationsumgebung konfiguriert ist,
wobei das Erfassungsmodul (13) spezifisch konfiguriert ist zum: Erfassen von Bewegungsdistanzinformation gemäß einem Beschleunigungswert, der durch einen Sensor erfasst wird; Erfassen von Bewegungsrichtungsinformation der Steuervorrichtung gemäß dem Sensor; Erfassen einer Bewegungsbahn gemäß der Bewegungsdistanzinformation und der Bewegungsrichtungsinformation; und Erhalten der Anordnung der Manipulationsumgebung durch Aufzeichnen der Bewegungsbahn der Bewegung in einem Kreis um einen Rand der Manipulationsumgebung.

7. Vorrichtung nach Anspruch 6, wobei die Vorrichtung ferner aufweist:
ein Identifizierungsmodul (14), das zum Identifizieren des Standorts der gesteuerten Vorrichtung in der Anordnung der Manipulationsumgebung konfiguriert ist, nachdem das Erfassungsmodul (13) die Anordnung der Manipulationsumgebung erfasst hat und bevor das Bestimmungsmodul (11) gemäß der absoluten Betriebsrichtung, der Anordnung der Manipulationsumgebung und dem Standort der gesteuerten Vorrichtung in der Anordnung der Manipulationsumgebung die gesteuerte Zielvorrichtung bestimmt, mit dem die ausgewählte Datei gemeinsam benutzt wird.

8. Vorrichtung nach Anspruch 7, wobei das Erkennungsmodul (10) spezifisch zum Erkennen einer absoluten Betriebsrichtung des Betreibens der ausgewählten Datei auf einem Anzeigeschirm der Steuervorrichtung, zum Bestimmen einer gegenwärtigen geografischen Richtung gemäß dem Sensor, und zum Bestimmen, gemäß der Betriebsrichtung, in der ein Benutzer einen Vorgang auf die ausgewählte Datei auf dem Anzeigeschirm der Steuervorrichtung ausführt, und der gegenwärtigen geografischen Richtung, der absoluten Betriebsrichtung des Betreibens der ausgewählten Datei konfiguriert ist.

9. Vorrichtung nach Anspruch 8, wobei das Bestimmungsmodul (11) spezifisch konfiguriert ist zum: Erfassen eines Referenzbereichs des Standorts der gesteuerten Vorrichtung, wobei der Referenzbereich ein Bereich ist, der unter Verwendung eines Betriebsstartpunkts der ausgewählten Datei auf dem Anzeigeschirm der Steuervorrichtung als ein Scheitel, unter Verwendung der absoluten Betriebsrichtung als eine Winkelhalbierende oder einer Seite des Winkels und unter Verwendung eines Identifikationsumfangs eines Scheitelwinkels als ein Winkel bestimmt wird; Erfassen einer gesteuerten Vorrichtung im Referenzbereich gemäß dem Standort der gesteuerten Vorrichtung in der Anordnung der Manipulationsumgebung; und Verwenden der gesteuerten Vorrichtung im Referenzbereich als die gesteuerte Zielvorrichtung, mit der die ausgewählte Datei gemeinsam benutzt wird.

## Revendications

1. Procédé de transmission de fichier consistant :
à reconnaître, au moyen d'un dispositif de commande, une direction d'opération absolue d'une exploitation d'un fichier sélectionné ;
à déterminer, au moyen du dispositif de commande, en fonction de la direction d'opération absolue, d'une disposition d'un environnement de manipulation et d'une position d'un dispositif commandé dans la disposition de l'environnement de manipulation, un dispositif commandé cible avec lequel le fichier sélectionné est partagé, dans lequel la disposition de l'environnement de manipulation est un diagramme structurel d'une configuration d'un environnement de manipulation dans lequel le dispositif de commande et le dispositif commandé coexistent ; et
à transmettre, au moyen du dispositif de commande, le fichier sélectionné au dispositif commandé cible pour partager le fichier sélectionné,
dans lequel, avant la détermination, par le dispositif de commande, en fonction de la direction d'opération absolue, d'une disposition d'un environnement de manipulation et d'une position d'un dispositif commandé dans la disposition de l'environnement de manipulation, d'un dispositif commandé cible avec lequel le fichier sélectionné est partagé, le procédé consiste en outre :
à acquérir, au moyen du dispositif de commande, la disposition de l'environnement de manipulation,
dans lequel l'acquisition, par le dispositif de commande, de la disposition de l'environnement de manipulation consiste :
à créer, au moyen du dispositif de commande, la disposition de l'environnement de manipulation,
dans lequel la création, par le dispositif de commande, de la disposition de l'environnement de manipulation consiste :
à acquérir, au moyen du dispositif de commande, des informations de distance de mouvement en fonction d'une valeur d'accélération acquise par un capteur ;
à acquérir, au moyen du dispositif de commande, des informations de direction de mouvement du dispositif de commande en fonction du capteur ;
à acquérir, au moyen du dispositif de commande, un suivi de mouvement en fonction des informations de distance de mouvement et des informations de direction de mouvement ; et
à obtenir, au moyen du dispositif de commande, la disposition de l'environnement de manipulation en enregistrant le suivi de mouvement d'un mouvement dans un cercle autour d'un bord de l'environnement de manipulation.

2. Procédé selon la revendication 1, après l'acquisition, par le dispositif de commande, de la disposition de l'environnement de manipulation et avant la détermination, par le dispositif de commande, en fonction de la direction d'opération absolue, d'une disposition d'un environnement de manipulation et d'une position d'un dispositif commandé dans la disposition de l'environnement de manipulation, d'un dispositif commandé cible avec lequel le fichier sélectionné est partagé, le procédé consistant en outre :
à identifier, au moyen du dispositif de commande, la position du dispositif commandé dans la disposition de l'environnement de manipulation.

3. Procédé selon la revendication 2, dans lequel la reconnaissance, par un dispositif de commande, d'une direction d'opération absolue d'une exploitation d'un fichier sélectionné, consiste :
à reconnaître, au moyen du dispositif de commande, une direction d'opération d'une exploitation du fichier sélectionné sur un écran de visualisation du dispositif de commande ;
à déterminer, au moyen du dispositif de commande, une direction géographique actuelle en fonction du capteur ; et
à déterminer, au moyen du dispositif de commande, en fonction de la direction d'opération dans laquelle un utilisateur effectue une opération sur le fichier sélectionné sur l'écran de visualisation du dispositif de commande, et de la direction géographique actuelle, la direction d'opération absolue d'une exploitation du fichier sélectionné.

4. Procédé selon la revendication 3, dans lequel la détermination, par le dispositif de commande, en fonction de la direction d'opération absolue et d'une position d'un dispositif commandé dans la disposition de l'environnement de manipulation, d'un dispositif commandé cible avec lequel le fichier sélectionné est partagé, consiste :
à acquérir, au moyen du dispositif de commande, une zone de référence de la position du dispositif commandé, dans lequel la zone de référence est une zone déterminée en utilisant un point de commencement d'opération du fichier sélectionné sur l'écran de visualisation du dispositif de commande comme sommet, en utilisant la direction d'opération absolue comme bissectrice d'angle ou côté d'un angle et en utilisant une portée d'identification d'un angle de sommet comme angle ;
à acquérir, au moyen du dispositif de commande, un dispositif commandé dans la zone de référence en fonction de la position du dispositif commandé dans la disposition de l'environnement de manipulation ; et
à utiliser, au moyen du dispositif de commande, le dispositif commandé dans la zone de référence comme dispositif commandé cible avec lequel le fichier sélectionné est partagé.

5. Procédé selon la revendication 4, le procédé consistant en outre :
à afficher, au moyen du dispositif de commande, lorsque la zone de référence comprend au moins deux dispositifs commandés, des identifiants d'affichage des deux, ou plus, dispositifs commandés ;
à détecter, au moyen du dispositif de commande, des informations concernant un dispositif commandé sélectionné ; et
à utiliser, au moyen du dispositif de commande, le dispositif commandé sélectionné comme dispositif commandé cible avec lequel le fichier sélectionné est partagé.

6. Dispositif de commande comprenant :
un module de reconnaissance (10), configuré pour reconnaître une direction d'opération absolue d'une exploitation d'un fichier sélectionné ;
un module de détermination (11), configuré pour déterminer, en fonction de la direction d'opération absolue, d'une disposition d'un environnement de manipulation et d'une position d'un dispositif commandé dans la disposition de l'environnement de manipulation, un dispositif commandé cible avec lequel le fichier sélectionné est partagé, dans lequel la disposition de l'environnement de manipulation est un diagramme structurel d'une configuration d'un environnement de manipulation dans lequel le dispositif de commande et le dispositif commandé coexistent ; et
un module de transmission (12), configuré pour transmettre le fichier sélectionné au dispositif commandé cible pour partager le fichier sélectionné,
le dispositif de commande comprenant en outre :
un module d'acquisition (13), configuré pour acquérir la disposition de l'environnement de manipulation avant que le module de détermination (11) ne détermine, en fonction de la direction d'opération absolue, de la disposition de l'environnement de manipulation et de la position du dispositif commandé dans la disposition de l'environnement de manipulation, le dispositif commandé cible avec lequel le fichier sélectionné est partagé,
dans lequel le module d'acquisition (13) est spécialement configuré pour créer la disposition de l'environnement de manipulation,
dans lequel le module d'acquisition (13) est spécialement configuré : pour acquérir des informations de distance de mouvement en fonction d'une valeur d'accélération acquise par un capteur ; pour acquérir des informations de direction de mouvement du dispositif de commande en fonction du capteur ; pour acquérir un suivi de mouvement en fonction des informations de distance de mouvement et des informations de direction de mouvement ; et pour obtenir la disposition de l'environnement de manipulation d'un environnement de manipulation en enregistrant le suivi de mouvement d'un mouvement dans un cercle autour d'un bord de l'environnement de manipulation.

7. Dispositif selon la revendication 6, le dispositif comprenant en outre :
un module d'identification (14), configuré pour identifier la position du dispositif commandé dans la disposition de l'environnement de manipulation après que le module d'acquisition (13) acquiert la disposition de l'environnement de manipulation et avant que le module de détermination (11) ne détermine, en fonction de la direction d'opération absolue, de la disposition de l'environnement de manipulation et de la position du dispositif commandé dans la disposition de l'environnement de manipulation, le dispositif commandé cible avec lequel le fichier sélectionné est partagé.

8. Dispositif selon la revendication 7, dans lequel le module de reconnaissance (10) est spécialement configuré pour reconnaître une direction d'opération d'une exploitation du fichier sélectionné sur un écran de visualisation du dispositif de commande ; pour déterminer une direction géographique actuelle en fonction du capteur ; et pour déterminer, en fonction de la direction d'opération dans laquelle un utilisateur effectue une opération sur le fichier sélectionné sur l'écran de visualisation du dispositif de commande, et de la direction géographique actuelle, la direction d'opération absolue d'une exploitation du fichier sélectionné.

9. Dispositif selon la revendication 8, dans lequel le module de détermination (11) est spécialement configuré : pour acquérir une zone de référence de la position du dispositif commandé, dans lequel la zone de référence est une zone déterminée en utilisant un point de commencement d'opération du fichier sélectionné sur l'écran de visualisation du dispositif de commande comme sommet, en utilisant la direction d'opération absolue comme bissectrice d'angle ou comme côté d'un angle et en utilisant une portée d'identification d'un angle de sommet comme angle ; pour acquérir un dispositif commandé dans la zone de référence en fonction de la position du dispositif commandé dans la disposition de l'environnement de manipulation ; et pour utiliser le dispositif commandé dans la zone de référence comme dispositif commandé cible avec lequel le fichier sélectionné est partagé.
